Europäisches Patentamt
European Patent Office
Office européen des brevets

(19) (11) Publication number: **0 014 921**
**A1**

(12)
# EUROPEAN PATENT APPLICATION

(21) Application number: 80100655.2

(22) Date of filing: 08.02.80

(51) Int. Cl.$^3$: **C 09 D 3/72**
G 03 C 1/02, C 08 G 18/08

(30) Priority: 16.02.79 US 12690
07.12.79 US 101371

(43) Date of publication of application:
03.09.80 Bulletin 80/18

(84) Designated Contracting States:
BE CH DE FR GB IT NL

(71) Applicant: EASTMAN KODAK COMPANY
343 State Street
Rochester, New York 14650(US)

(72) Inventor: Upson, Donald Allen
Kodak Park
Rochester, New York(US)

(72) Inventor: Steklenski, David John
Kodak Park
Rochester, New York(US)

(72) Inventor: Chen, Tsang Jan
Kodak Park
Rochester, New York(US)

(74) Representative: Brandes, Jürgen, Dipl.-Chem. Dr. et al,
Thierschstrasse 8
D-8000 München 22(DE)

(54) **Coating compositions and processes.**

(57) Coating compositions containing polyurethane latex particles having hydrophobic compounds associated therewith and processes for preparing such compositions are disclosed. These "loaded" polyurethane latices are comparatively more stable than are loaded vinyl polymer latices. Polyurethane latices made of polycaprolactone prepolymers form particularly stable loaded latices.

EP 0 014 921 A1

# COATING COMPOSITIONS AND PROCESSES

The present invention relates to coating compositions and to processes for preparing such compositions. The coating compositions are particularly useful in preparing coated layers on photographic elements.

Hydrophobes can become associated with latex polymer particles in an aqueous dispersion. These latices, wherein the idividual latex polymer particles have associated therewith a hydrophobe, are referred herein to as "loaded latices". These loaded latices are useful in providing aqueous coating compositions of hydrophobic materials which might otherwise have to be coated or applied from an organic solvent-containing composition. For example, in the photographic arts many of the image-forming layers are hydrophilic, yet many of the useful photographic chemicals are hydrophobic. Thus, while the coating processes as a whole are adapted to applying aqueous coatings, photographic addenda such as color couplers, developing agents, UV absorbers and the like must be either dissolved in an organic solvent and dispersed as oil droplets in photographic emulsions or coated from organic solvents. By virtue of the latex loading technique, these hydrophobic photographic components can now be associated with polymeric latex particles and can therefore be coated from aqueous coating compositions.

A latex loading process is described in Research Disclosure, Vol. 159, item 15930, July, 1977. In one preferred embodiment of this described process, the hydrophobe to be loaded is dissolved in a water-miscible organic solvent. This organic solution of the hydrophobe is then blended with an

aqueous dispersion of the polymeric latex particles. While some loading of the hydrophobe takes place upon blending, loading is greatly enhanced by removing the organic solvent from the mixture. In this manner, the hydrophobe becomes "loaded" onto or into the polymer particles of the latex, i.e., associated with the particles.

Hydrophobes are described in the above-identified <u>Research Disclosure</u> as compounds which are essentially insoluble in distilled water of 25° C. The dissolved concentration of hydrophobe in a saturated aqueous solution under these conditions is less than about 0.5% by weight, based on the weight of the solution. While this definition defines hydrophobes which are indeed quite hydrophobic, many compounds are extremely insoluble, which results in saturated water solutions which are considerably less than 0.5% by weight of the compound.

The above-identified <u>Research Disclosure</u> describes a wide variety of latices which can be loaded according to the described procedure. Any latex which meets the "Loadable Polymer Particle Test" as described in that <u>Research Disclosure</u> is useful. Polymer particles which are particularly useful are polymer particles made from ethylenically unsaturated monomers. One specific polymer which is listed as being useful is a poly(<u>n</u>-butyl acrylate-co-2-acrylamido-2-methylpropanesulfonic acid). Extremely insoluble hydrophobes are successfully loaded into this and similar vinyl polymer particles. However, the resulting loaded latex dispersion is generally not storage-stable. Typically, the highly hydrophobic compound will crystalize and precipitate from the loaded latex after a short period of time. While this short period of time, for example, a few hours or less, is sufficiently

long to allow for coating of the composition, it would be desirable to be able to prepare coating compositions containing loaded latices which are storage-stable for longer periods of time.

A coating composition comprising a latex having water as a continuous phase and, as a dispersed phase, hydrophobic polymer particles having associated therewith a water-miscible-organic-solvent soluble hydrophobic compound, of improved stability, can be prepared when the hydrophobic polymer particles comprise a polyurethane polymer. Polyurethane latices provide loaded latices which are stable for comparatively long periods. While loaded vinyl polymer latices of highly hydrophobic materials might be stable for 1 to 2 hours or less, loaded polyurethane latices of highly hydrophobic materials are typically stable for weeks or even months.

Some hydrophobes which are particularly difficult to load may not form loaded latices which are stable for long periods, even with polyurethane latices. However, the polyurethane latices loaded with these difficult-to-load hydrophobes will be comparatively more stable than other classes of latices loaded with these same hydrophobes. Similarly, hydrophobes which are particularly easy to load will form loaded latices which are stable for long periods with latices other than polyurethane polymers.

Preferred polyurethane polymers are derived from a polyol component and an isocyanate component. The polyol component comprises:

(a) from 10-100 mole percent of the total polyol present of one or a mixture of prepolymers having at least two hydroxy groups and a molecular weight from 300-20,000, the recurring units in the prepolymer being lower alkyl ether or lower alkyl

ester; and

(b) from 90-0 mole percent based on the total polyol present of a low-molecular-weight diol with or without a functional group to impart a positive or a negative charge.

The isocyanate component conforms to the structure OCNRNCO wherein R is alkylene, cycloalkylene, arylene, alkylenebisarylene or arylenebisalkylene.

Particularly preferred polyurethane latices are derived from caprolactone-containing prepolymers. These polyurethane latices exhibit still greater stability when loaded with hydrophobic compounds.

While the stability of polyurethane latices which are loaded with any hydrophobic compound is expected to be improved relative to loaded vinyl polymer latices, the enhanced stability is particularly important when the polyurethane latices are loaded with highly hydrophobic compounds. By "highly hydrophobic" it is meant that the compounds are essentially insoluble in 25° C distilled water to the extent that the dissolved concentration of a saturated water solution of the compound is less than 0.1% by weight, based on the total weight of the solution.

Polyurethane latices are well-known in the art. Any polyurethane latex which meets the loaded-polymer-particle test is useful according to the present invention. Useful polyurethane latices are described, for example, in US Patents 2,968,575, 3,213,049, 3,294,724, 3,565,844, 3,388,087, 3,479,310 and 3,873,484. Generally, polyurethane latices are prepared by chain-extending a prepolymer which is the reaction product of a diisocyanate and an organic compound having two active hydrogen atoms. Useful types of organic compounds which have two active hydrogen atoms include polyalkylene ether glycols,

alkyd resins, polyesters and polyester amides. Polyurethane latices are generally prepared by emulsifying the prepolymer and then chain-extending the prepolymer in the presence of a chain-extending agent such as water.

The compositions of the present invention are formed from latices. The terms "latices", "latex" and "latex dispersion" refer to a two-phase composition wherein water is the major component of the continuous phase. The disperse phase comprises minute hydrophobic polyurethane polymer particles. In a latex, as defined for the purpose of the present invention, the hydrophobic particles have a size range of from 0.02 to 0.2 micron, as distinguished from a suspension where the particles are usually much larger, e.g., 0.5 micron or larger.

Useful polyurethane latices are neutral or they are anionically or cationically stabilized. Anionically and cationically stabilized polyurethane latices are formed by incorporating charged groups into the polyurethane. Useful groups which impart a negative charge to the latex include carboxylate, sulfonate and the like. Useful repeating units are derived from polyol monomers containing these acidic functional groups such as 2,2-bis(hydroxymethyl)propionic acid, N,N-bis(2-hydroxyethyl)glycine and the like. Useful groups which impart a positive charge to the latex include quaternized amines, sulfonium salts, phosphinates and the like. Useful repeating units are derived from polyol monomers containing a tertiary amine or thio functional group such as N-methyldiethanolamine, 2,2'-thioethanol and the like. Useful examples of anionically and cationically stabilized polyurethane latices are described in US Patent 3,479,310. Particularly useful latices are cationically stabilized latices such as those described in US Patent 3,873,484.

Preferred polyurethane latices are derived from prepolymers represented by the structure:

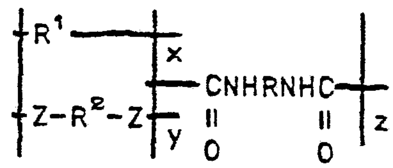

wherein:

R is alkylene of about 2 to 40 carbon atoms, alkylene-containing hetero atoms such as oxygen; cycloalkylene, such as cyclohexylene, alkylenebiscyclohexylene and isophorone-1,4-diyl; arylene including substituted arylene such as phenylene, naphthylene and tolylene; alkylenebisarylene; arylenebisalkylene and the like; all preferably containing 6 to 15 carbon atoms;

$R^1$ is:

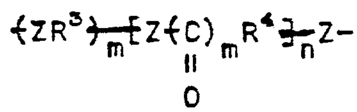

or

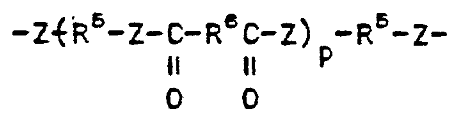

$R^2$, $R^3$ and $R^5$ are independently selected from the group consisting of alkylene of about 2-10 carbon atoms, cycloalkylenebis(oxyalkylene) such as 1,4-cyclohexylenebis(oxyethylene), arylenebisalkylene such as phenylenebismethylene and the residue of a 2-500 repeating unit poly(alkylene oxide) group wherein the alkylene portion has about 2-5 carbon atoms;

$R^4$ is alkylene having from about 2-10 carbon atoms;

$R^6$ is alkylene having from about 2-10 carbon atoms or arylene as mentioned for R;

each Z is independently -O- or -N=;

p and n are independently integers from 2-500;

m is 0 or 1;

y is 0-90 mole percent of the diol component;

x is correspondingly 100-10 mole percent of the diol component; and

z is between 1.1 and 2.0.

The minimum amount of isocyanate is that amount which is just sufficient to provide terminal isocyanate groups on both ends of the prepolymer, i.e., just over 1 mole of diisocyanate per mole of diol, i.e., z = 1. Preferably, the ratio is closer to 2 moles of diisocyanate per mole of diol.

Particularly preferred polyurethane latices are derived from glycol endcapped polycaprolactones. These polyurethanes are represented in the above formula when m is 1 and Z is 0.

A wide variety of polyols and diisocyanates are optionally used to form the stable loaded latex according to the present invention. Useful polyols include:

(1) diols such as alkylene diols of 2-10 carbon atoms, arylene diols such as hydroqunione, and polyether diols $[HO(RO)_nH]$ where R is alkylene such as poly(propylene)glycol, for example, Pluracol P-2010™, Pluracol P-1010™ sold by BASF Wyandotte and Niax PPG 2025™ sold by Union Carbide;

(2) triols such as glycerol, 2-ethyl-2-hydroxymethyl-,3-propane diol, 1,1,1-trimethylolpropane and 1,2,6- hexenetriol; and

(3) tetraols such as pentaerthyritol; higher polyols such as sorbitol; and the poly(oxyalkylene) derivatives of the polyhydric alcohols mentioned.

Other desirable polyols include linear polyesters of molecular weight of about 500 with terminal hydroxyl groups, low acid numbers and water content; block copolymers of ethylene and propylene oxides with a diamine such as ethylenediamine; and cap-rolactone polymers having end hydroxyl groups.

Typical diisocyanates which are useful in forming the loadable polyurethane latices according to the present invention include 2,4- and 2,6-toluene-diisocyanate, diphenylmethane-4,4'-diisocyanate, diphenylmethane-4,4'-diisocyanate, polymethylenediphenylene isocyanates, bitoluene diisocyanate, dianisidine diisocyanate, 1,5-naphthalene diisocyanate, 1,6-hexamethylene diisocyanate, bis(isocyanatocyclohexyl)methane diisocyanate, isophorone diisocyanate, 2,2,4-trimethylhexane diisocyanate and xylene diisocyanate.

The prepolymer is typically prepared by mixing the polyol and the diisocyanate, under nitrogen with agitation. Temperatures of from about 25° C to about 110° C are useful. The reaction is preferably carried out in the presence of a solvent and, optionally, in the presence of a catalyst. Useful solvents include ketones and esters, aliphatic hydrocarbon solvents such as heptanes, octanes and the like, and cycloaliphatic hydrocarbons such as methylcyclohexane, and the like. Useful catalysts include tertiary amines, acids and organometallic compounds such as triethylamine, stannous chloride and di-n-butyl tin dilaurate. Where the polyol and isocyanates are liquids and where the prepolymer is also a liquid, the organic solvent is optional.

After the prepolymer is prepared, a latex is formed by emulsifying the prepolymer and chain-extending it in the presence of water. Emulsification of the prepolymer may occur in the presence of a surfactant. Where the prepolymer contains charged groups, it may not be necessary to add additional surfactant. Chain-extension of the prepolymer is accomplished by adding a chain-extending agent to the emulsified prepolymer.

Useful chain-extending agents include those

compounds having at least two functional groups bearing an active hydrogen atom. Typical examples include water, hydrazine, primary and secondary diamines, amino alcohols, amino acids, hydroxy acids, diols, or mixtures thereof. A preferred group of chain-extending agents includes water and primary and secondary diamines. Preferred diamines include 1,4-cyclohexenebis(methylamine), ethylenediamine, diethylenetriamine and the like. The amount of chain-extending agent is typically equal to the isocyanate equivalent of prepolymer.

The polyurethane latex must be loadable. By "loadable" it is meant that the polyurethane polymer particles being tested must (a) be capable of forming a latex with water at a polymer-particle concentration of from 10-20 percent by weight, based on the total weight of latex, and (b) when 100 mL of latex is then mixed with an equal volume of the water-miscible organic solvent to be employed when forming the loaded polymeric latex composition desired, stirred and allowed to stand for 10 minutes, exhibit no observable coagulation of the polymer particles. These conditions must be met with the latex in question at 25° C.

In order to form the loaded latex composition of the present invention, the hydrophobe is dissolved in a water-miscible organic solvent. Useful solvents are those which:

(a) can be dissolved in water at 20° C to the extent of at least 20 parts by volume of solvent in 80 parts by volume of water;

(b) have boiling points (at atmospheric pressure) above about -10° C;

(c) do not detrimentally react chemically or physically with latex polymer or the hydrophobe; and

(d) do not dissolve more than about 5

weight percent of loaded polymer particles at 20° C.

Useful water-miscible organic solvents are water-miscible alcohols, ketones and amides, tetrahydrofuran, n-methyl-2-pyrrolidone, dimethylsulfoxide, and mixtures thereof. Illustrative examples of these solvents include acetone, ethyl alcohol, methyl alcohol, isopropyl alcohol, dimethylformamide, methyl ethyl ketone and the like.

The preferred process for loading the hydrophobe into/onto the latex polymer particles is as follows. First, a solution of the hydrophobe is formed by dissolving the hydrophobe in a suitable water-miscible organic solvent. Second, a latex is formed by dispersing the polyurethane polymer particles in an aqueous continuous phase. Third, the latex is blended with the solution of the hydrophobe. Finally, the polyurethane polymer particles in the continuous phase are further loaded with the hydrophobe by removing the organic solvent.

After the solution of the hydrophobe and the dispersion of the loadable polyurethane polymer particles are formed, the two are blended. Generally, it is preferred to blend the water-miscible organic solvent solution into the dispersion of the loadable polyurethane polymer particles; however, any order of addition can be used. Blending is undertaken so that the hydrophobe remains in solution and the loadable polyurethane polymer particles remain dispersed. While some loading of the hydrophobe takes place upon blending, it is preferred to load the hydrophobe into the polymer particles further by removing at least a major portion of the water-miscible organic solvent.

The weight ratio of the polymer particles to the hydrophobe in the composition of the present invention can vary over a wide range. A useful range

of the weight ratio of the polymer particles to hydrophobe is between 0.5 and 20:1. Particularly desirable compositions are formed when this ratio is between 1:1 and 10:1.

Loading the hydrophobic compounds into the latex particles by the preferred method has been described in detail. It will be understood, however, that other methods can be used. For example, the hydrophobe and the latex polyurethane polymer can be chosen so that the hydrophobe is soluble in the monomers or prepolymer which is used to form the polyurethane latex. Chain-extending the prepolymer with the hydrophobe dissolved therein produces a loaded polyurethane latex within the scope of the present invention.

The weight percent solids in the latex compositions of the present invention vary widely. By "solids" in this context, it is meant the dispersed hydrophobic polymer particles including the loaded hydrophobe. A useful range for the weight percent solids in the composition is between 5.0 percent and 40 percent based on the total weight of the composition.

Surfactants are optionally used both in the preparation of the loadable latices and in the final loaded composition. Surfactants are useful in emulsifying the prepolymers used to prepare the loadable polyurethane latices and in stabilizing the loadable latices prior to and after loading. In many instances, particularly where cationically or anionically stabilized latices are used, surfactants are not necessary. Where they are used, they are typically used in a small amount such as 0.1 to 5 percent by weight of the composition. The particular surfactant depends on the particular latex and hydrophobe and

is optionally anionic, cationic, nonionic or hybrid anionic-nonionic. Useful surfactants include polyethylene glycol ethers of long-chain diols, quaternary ammonium salts, the tertiary amine or alkylol amine salts of long-chain alkyl and sulfate esters, alkyl sulfonic acids or alkylaryl sulfonic acids and salts, alkali metal salts of high-molecular-weight organic acids, and the like. Particularly preferred are the nonionic surfactants such as the polyoxyethylene and poly(propylene glycols) and the nonylphenoxypolyethyleneoxy ethanols. These nonionic surfactants are commercially available.

The loaded latex coating compositions of the present invention are typically used as coating compositions to form layers on a support. However, the loaded latex compositions of the present invention can be used as aqueous carriers for the hydrophobe. For example, where the hydrophobe is an insecticide or a herbicide, the latex composition of the present invention is usually sprayed on plants.

A polyurethane latex dispersion is particularly useful in loading highly hydrophobic compounds. These compounds typically form saturated water solutions which are less than 0.1 percent by weight of the hydrophobe at 25° C. Useful hydrophobes are those which dissolve in a liquid consisting of one or a mixture of water-miscible organic solvents. Preferably, the hydrophobe is soluble in a concentration of at least 5 percent by weight based on the total weight of water-miscible organic solvent and the dissolved hydrophobe. The hydrophobe and water-miscible organic solvent or solvents are chosen so that additional materials such as pH or other modifiers are not required to dissolve the hydrophobe. The water-miscible-organic-solvent solutions of the hydrophobe optionally, however,

contain minor amounts of diluent materials such as minor amounts of water commonly entrained in water-miscible organic solvents.

Useful hydrophobic compounds which are loadable into the polyurethane latices according to the present invention are described in Research Disclosure, Vol. 159, item 15930, cited above. More particularly, the useful hydrophobes are described on pages 67-69 of that Research Disclosure. Many of the described hydrophobes are highly hydrophobic in that they form saturated water solutions which are less than 0.1 percent by weight hydrophobe.

One particularly preferred class of hydrophobic compounds consists of polyanilines whose salts form semi-conductors. Layers coated from compositions in which the polyanilines are loaded onto cationically stabilized polyurethane latices and acidified to form semiconductors exhibit good conductivity.

The coating compositions of the present invention optionally contain, in addition to the surfactants described above, thickening agents, preservatives, other latex dispersions and the like. For example, a UV absorber-loaded polyurethane latex according to the present invention optionally can be blended with a conventional latex such as a house paint. The UV absorber from the latex of the present invention will provide UV protection to a layer coated from such a blend. Other hydrophobes can function as optical brighteners and the like. The loaded latices of the present invention are useful whenever it is desired to include a hydrophobic compound, particularly one which is highly hydrophobic, in an aqueous coating composition.

The coating compositions of the invention can be coated on any support. For example, where

the hydrophobe is an insecticide or herbicide, the composition is coated on plants; where the hydrophobe is a UV absorber, the composition optionally is included in a paint or other composition which can be coated on wood, aluminum, steel, natural and synthetic cloth, and the like. Photographic addenda are particularly preferred hydrophobes and coating compositions containing these addenda optionally are coated on photographic supports such as cellulose acetate film, poly(ethylene terephthalate) film, paper, polyethylene-coated paper and the like.

The coating compositions of the invention can be coated by means well-known in the art including spraying, dipping, slide hopper coating, spin coating and the like.

Further details regarding the process of loading polymeric latex particles and the use of loaded latices so produced, particularly for use on photographic elements, are found in the above-cited Research Disclosure, Vol. 159, item 15930. The entire disclosure of this Research Disclosure is hereby incorporated by reference.

It will be understood that, throughout this specification where the terms "latex", "water-miscible organic solvent", "hydrophobe", "surfactant" and the like have been used, homogeneous or heterogeneous components have been intended. Thus, in some cases it is desirable to use a mixture of two or more different water-miscible organic solvents to dissolve a particular hydrophobe, or it is desirable to load various combinations of differnet hydrophobes. Similarly, a blend of two or more different polyurethane latices or a blend of a polyurethane latex with a vinyl polymer latex can be loaded. Other combinations and variations will be apparent.

The following preparations illustrate anionic neutral and cationic polyurethane latices which are used in the examples which follow.

<u>Preparation 1</u>: Anionic polyurethane latex

In a three-necked, one-liter flask equipped with an air-drawn stirrer, a reflux condenser and a nitrogen inlet, were added 150 g of Pluracol P2010™ - a poly(propylene glycol)diol, MW $\approx$ 2000, sold by BASF Wyandotte; 50 g of Niax PPG 2025™ - a poly(propylene glycol)diol, MW 2000, sold by Union Carbide; and 13.4 g of 2,2-bis(hydroxymethyl)-propionic acid. The content was dehydrated under aspirator vacuum at 80° C for 2 hr. The flask was then cooled to 25° C, and 69.6 g of 2,4-tolylenediisocyanate was added. The run was heated in two stages: at 65° for 20 min. and at 70° C for 2-1/2 hr. Subsequently, the reaction mixture was cooled at 25° C. Igepal CO 630™ (nonylphenoxypoly(ethyleneoxy)ethanol, a neutral surfactant sold by GAF Corp) (6 g) was added and the mixture stirred for 10 min. Deionized water (500 mL) containing 4 g of NaOH was then rapidly introduced to the mixture with vigorous stirring. The latex thus formed was stirred slowly over about 60 hrs. and then dialyzed for 7 hr. The final latex had a total solids content of 25%.

<u>Preparation 2:</u> Neutral polyurethane latex

In apparatus similar to that described in Preparation 1, 200 g of Pluracol P1010™ - MW 1000, poly(propylene glycol)diol sold by BASF Wyandotte; 27 g of poly(ethylene glycol) - (MW 6000; and 130 mL of dry acetone (dried over anhydrous $Na_2SO_4$) were heated to 60° C under nitrogen, and 36.6 g of hexamethylene diisocyanate were added with 5 drops of dibutyl tin diacetate as catalyst. The reaction was allowed to proceed for 4 hr at 60° C. After

the addition of 160 mL more acetone (containing 0.7 g of ethanol and 4 g of Igepal CO730™, a neutral surfactant similar in structure to Igepal CO630™ surfactant), 420 mL of distilled water were slowly dropped in over about a 1-hr period. During the addition of the water, 200 mL more acetone and 200 mL methanol were added to lower the viscosity of the mixture. Finally, 200 mL water were added and the organic solvents were stripped off at 50° C under vacuum. The latex was dialyzed overnight, and the total solid content was 16.4%.

Preparation 3: Cationic polyurethane latex

Pluracol P2010™ (100 g) was dehydrated for 1 hr under vacuum at 80° C and then cooled at 25° C. Tolylene-2,4-diisocyanate (34.8 g) and N-methyldiethanolamine 5.95 g were added and the mixture was heated to 55° C for 1-1/2 hr. After the addition of 6.3 g of dimethylsulfate in 15 mL of dry acetone, the temperature was raised to 65° C for 1 hr. The run was then cooled to 25° C and 3 g of Igepal CO630™ were added and stirred for 10 min. Then 350 mL deionized water were quickly added to the rapidly stirring mixture. The stirring was continued for 1 hr. The latex was then dialyzed for 7 hr. and the total solid content was 25.6%.

Preparation 4: Cationic polyurethane latex using a poly(caprolactone) diol

To a 5-liter flask containing 207.6 g (0.8 mole) of Hylene W™ (4,4'-methylenebis(cyclohexane diisocyanate) sold by duPont Co) and 40 mL of toluene at 35° C under nitrogen were added 106 g (0.2 mole) of PCP 0200™ (an ethylene glycol end-capped polycaprolactone sold by Union Carbide Corp) dissolved in 40 mL of toluene and 2 drops of dibutyl tin dilaurate over a 2-hr. period. The reaction was allowed to proceed

for an additional 1 hr at 35° C, and 24 g (0.2 mole) of N,N-(2-hydroxyethyl)-N-methylamine in 40 mL of toluene were dropped in over a 2-hr. period. After an additional 2 hr. of reaction, 25.2 g (0.2 mole) of dimethyl sulfate were added rapidly, followed by 200 mL of acetone. The reaction mixture was kept at room temperature overnight under nitrogen after 8 g of Igepal CO730™ were added. Acetone (150 mL) was charged to the reaction mixture after the mixture was allowed to stand overnight and 1600 mL of deionized water were rapidly added. Then the temperature was raised to 50° C slowly with good agitation. The toluene and acetone were removed at 65° C under aspirator vacuum. The final latex had a total solids content of 18% after overnight dialysis.

The following examples are presented to illustrate the invention. The hydrophobic compounds are more specifically identified in the table following these examples.

Example 1:

A polyurethane latex was loaded with a photographic developer in the following manner. To a solution containing 2.5 g of photographic developer (Compound X1) in 50 mL of methanol were added 50 g of diluted cationic polyurethane latex from Preparation 3 containing 7.5 g of the polymer. The methanol was then removed by rotary evaporation at 50° C and the resulting developer-loaded polyurethane latex was filtered. The filtered loaded latex was stable. No visible crystallization was observed after 2 wk. at room temperature.

Comparative Example 1-A:

Example 1 was repeated except that an acrylate latex polymer was substituted for the cationic polyurethane latex. The acrylate latex was poly(butyl-

acrylate-co-2-acrylamido-2-methylpropanesulfonic acid, sodium salt) (weight ratio 90:10). While the loaded latex was stable for a period of time sufficient to allow coating, after 2 days crystallization of the developer was observed.

Example 2:

Example 1 was repeated except that the latex was Witcobond W210™ (sold by the Witco Chemical Co.) and the organic solvent was acetone. Witcobond W210 is a cationic polyurethane latex derived from polypropylene oxide, N,N-di(2-hydroxyethyl)-N-methylamine and 4,4'-methylenebis-(cyclohexyl diisocyanate) quaternized with dimethyl sulfate. (See US Patent 3,873,484.) A good stable dispersion was obtained and no crystallization was observed after 2 days at room temperature.

Examples 3-18:

A series of loaded latex dispersions were prepared using a variety of hydrophobic compounds and a variety of latices. The method used in each case was similar to the method used in Example 1. The variations are tabulated in Table 1. In each case, a good stable dispersion resulted.

Table 1

| Example | Hydrophobe | Organic Solvent | Latex |
|---|---|---|---|
| 3 | 0.5 g of X2 | 20 mL acetone | 20 g of latex #3 containing 1.5 g polymer |
| 4 | 0.14 g of X2 and 0.1 g of X3 | 10 mL ethanol and 2 mL acetone | 7.3 g of Witcobond W210® containing 1.14 g polymer |
| 5 | same | same | 7.3 g of latex #1 (wherein molar ratio of diol/acid/isocyanate was 1.0/1.5/5.0) containing 1.14 g polymer |
| 6 | same | same | 7.3 g of latex #3 containing 1.14 g polymer |
| 7 | 1.0 g of X4 | 20 mL acetone | 20 g of latex #1 containing 1 g polymer |
| 8 | 1.0 g of X5 | 30 mL acetone | 30 g of latex #1 containing 1 g polymer |
| 9 | same | same | same except latex #2 |
| 10 | 1 g of X6 | 30 mL acetone | 30 g of latex #1 containing 1 g polymer |
| 11 | same | same | same except latex #2 |
| 12 | same | same | same except latex #3 |
| 13 | 1.0 g of X7 | 30 mL methanol | 30 g of latex #1 containing 5 g polymer |
| 14 | same | same | same except latex #2 |
| 15 | 1.0 g of X8 | 50 mL acetone | 50 g of Witcobond W-210® containing 5 g polymer |
| 16 | 1.0 g of X9 | 30 mL acetone | 30 g of latex #1 containing 2 g polymer |
| 17 | same | same | same except latex #2 |
| 18 | same | same | same except latex #3 |

Example 19:

This is a comparative example.

Loaded latex dispersions were prepared in a manner similar to Example 1. A variety of hydrophobes and a variety of latices were used. These latex dispersions were stored at room temperature and were examined periodically under an optical microscope.

The hydrophobes which were used, in order of decreasing water solubility, were t-butylhydroquinone, photographic developer (Compound X1), yellow coupler (Compound X10) and polyaniline semiconductor precursor (Compound X11). The latices which were used were the vinyl polymer latex of comparative Example 1-A (comparative latex), Witcobond W-210™ and the polycaprolactone polyurethane of Preparation 4 (latex #4). The results are presented in Table 2. The numbers in the parentheses after the hydrophobe represent the weight percent of the hydrophobe and polymer respectively in the loaded dispersion. For example, 5/15 indicates that the dispersion contained 5 weight percent hydrophobe and 15 weight percent polymer based on the total weight of the latex dispersion.

Table 2

| Hydrophobe | Comparative Latex | Witcobond W-210® | Latex #4 |
|---|---|---|---|
| t-butylhydroquinone (5/15) | OK after 2 wk | OK after 2 wk | OK after 2 wk |
| X1 (5/15) | OK after 24 hr, large crystals after 4 days | OK after 24 hr, small crystals after 4 days | OK after 7 days |
| X10 (3/6) | large particles after 24 hr | OK after 7 days | OK after 7 days |
| X11 (1/5) | numerous fine crystals after 3 hr | few crystals after 3 hr | OK after 3 hr |

These results show that loaded polyurethane latices are more stable than loaded latices made from acrylate latices. Note that hydrophobes having some solubility (t-butylhydroquinone ~0.5 weight percent in water for a saturated solution) are relatively stable in all latices tested. However, as the solubility of the hydrophobe decreases, the advantages in the stability of the polyurethane latices, particularly those made from caprolactone, become more apparent.

Identification of Hydrophobic Compounds

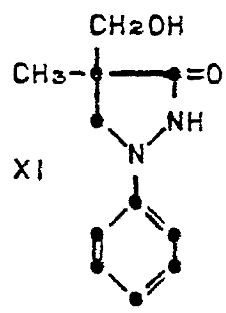

X1

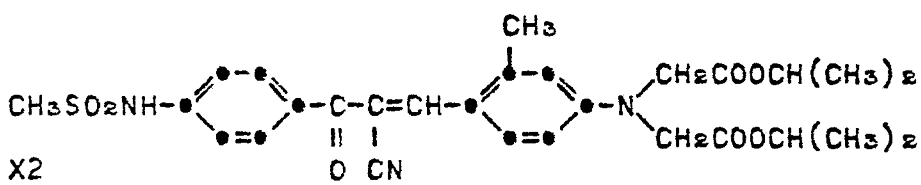

X2

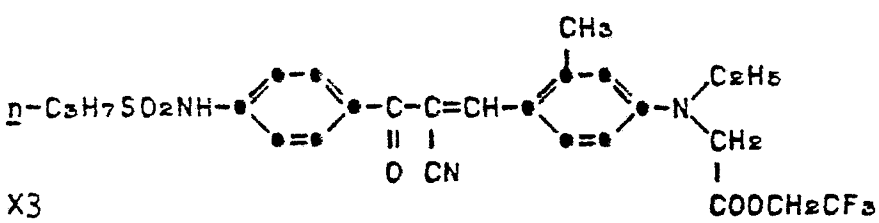

X3

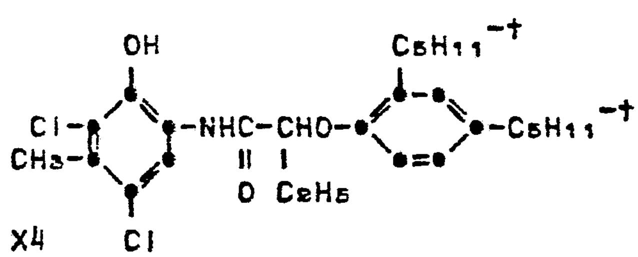

X4

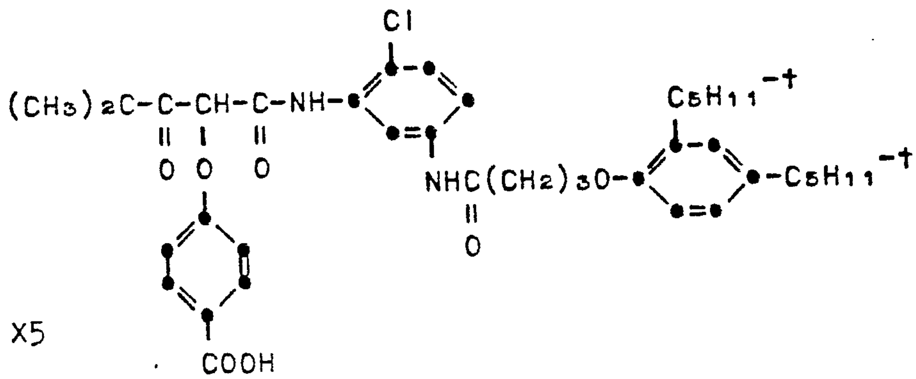

X5

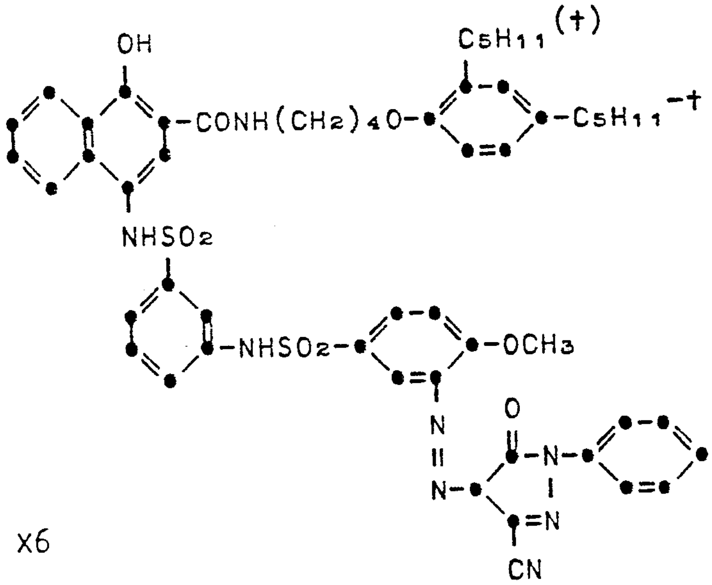

X6

X7

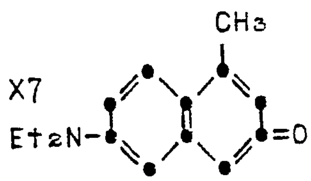

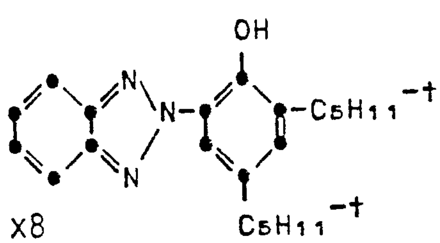

X8

X9

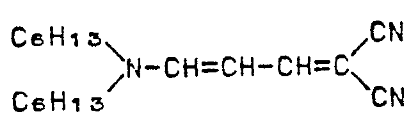

X10 coupler A of US 3,933,507

X11

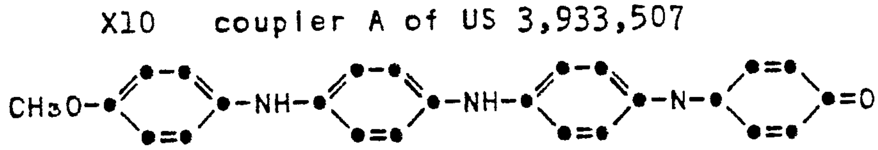

(not acidified)

Claims:

1. A coating composition comprising a latex having water as a continuous phase and, as a dispersed phase, hydrophobic polymer particles having associated therewith a water-miscible-organic-solvent-soluble hydrophobic compound, characterized in that said hydrophobic polymer particles comprise a polyurethane polymer.

2. A coating composition according to Claim 1 wherein said hydrophobic polymer particles comprise a polyurethane derived from a polyol component and an isocyanate component wherein said polyol component comprises:

(a) from 10 to 100 mole percent of one or a mixture of prepolymers having at least two hydroxy end groups and a molecular weight from 300 to 20,000, the recurring units in said prepolymers being lower alkyl ethers or lower alkyl esters and;

(b) from 90 to 0 mole percent of a low-molecular-weight diol,

and wherein said isocyanate component conforms to the structure OCNRNCO wherein R is alkylene, cycloalkylene, arylene, alkylene bisarylene or arylene bisalkylene.

3. A coating composition according to Claims 1 to 2 wherein said polyurethane polymer is derived from a prepolymer which conforms to the structure:

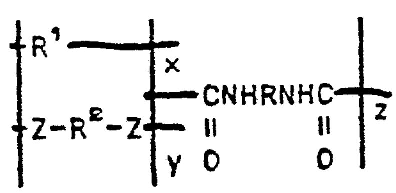

wherein:

R is alkylene, cycloaliphatic alkylene, arylene, alkylene bisarylene or arylene bisalkylene;

$R^1$ is:

$$-(ZR^3)_m-[Z(\underset{\underset{O}{\|}}{C})_m R^4]_n-Z- \quad \text{or} \quad -Z-(R^5-Z-\underset{\underset{O}{\|}}{C}-R^6-\underset{\underset{O}{\|}}{C}-Z)_p-R^5-Z-$$

wherein;

$R^2$, $R^3$ and $R^5$ are independently selected from the group consisting of alkylene and substituted alkylene;

$R^4$ is alkylene having from about 2-10 carbon atoms;

$R^6$ is alkylene having from about 2-10 carbon atoms or arylene;

each Z is independently -O- or -N-;

p and n are independently integers from 2-500;

m is 0 or 1;

y is 0 to 90 mole percent of the diol component and x is correspondingly 100 to 10 mole percent; and

z is between 1.1 and 2.0.

4. A coating composition according to Claims 1 to 3 wherein said hydrophobic compound is a compound which forms a saturated water solution which is less than 0.1 percent by weight of the hydrophobic compound.

5. A coating composition according to Claims 1 to 4 wherein the weight ratio of said polymer particles to said hydrophobic compound is between 1:1 and 10:1.

6. A coating composition according to Claims 1 to 5 wherein the combined weight percent of the dispersed hydrophobic polymer particles and hydrophobic compound is between about 5.0 percent and about 40 percent based on the total weight of the composition.

7. A coating composition according to Claim 1 to 6 wherein said polyurethane polymer is cationically

stabilized.

8. A coating composition according to Claim 1 wherein said polyurethane is derived from a poly (caprolactone), a polyol containing a quaternized amine group and an alkylene bis(cyclohexylene) diisocyanate.

9. A coating composition according to Claim 1 wherein said polyurethane is derived from a glycol end capped poly-(caprolactone), N,N-(2-hydroxyethyl) -N-methylamine quaternized with dimethyl sulfate and 4,4'-methylene bis(cyclohexane diisocyanate).

10. A process for preparing a coating composition according to Claims 1 to 9 comprising the steps of:

(a) dissolving said water-miscible-organic-solvent-soluble hydrophobic compound in a water-miscible organic solvent;

(b) blending the solution formed in step (a) with an aqueous dispersion of said hydrophobic polyurethane polymer particles; and

(c) removing said water-miscible organic solvent.

0014921

European Patent Office

# EUROPEAN SEARCH REPORT

Application number
EP 80 10 0655

## DOCUMENTS CONSIDERED TO BE RELEVANT

| Category | Citation of document with indication, where appropriate, of relevant passages | Relevant to claim |
|---|---|---|
| X | GB - A - 1 186 640 (BAYER)<br>* Pages 7 and 8; claims 1 and 4; page 2, lines 19-32, lines 58-65; page 3, lines 34-53; page 5, lines 2-20 *<br>-- | 1-9 |
| X | FR - A - 1 565 236 (BAYER)<br>* Page 8, summary; page 5, line 34 - page 6, line 24; page 6, lines 37-42 *<br>-- | 1-9 |
| X | FR - A - 2 391 490 (VEB FILM FABRIK WOLFEN)<br>* Page 11, claims 1 and 4; page 4, lines 24-38; page 5, lines 3-7; page 6, lines 22-35 *<br>-- | 1-10 |
| | US - A - 4 113 676 (K.W. NIEDERST)<br>* Column 12, claims 1,3 and 8-10; column 2, line 63 - column 3, line 52; column 5, lines 52-61 *<br>-- | 1-10 |
| | BE - A - 869 816 (KONISHIROKU PHOTO IND.)<br>* Pages 50-52, claims 1,4 and 10-12; page 7, paragraph 4 - page 9, paragraph 1 * | 1,10 |
| P | & DE - A - 2 835 856 (published on 22-02-1979)<br>-- | |
| D | RESEARCH DISCLOSURE, vol. 159, july 1977<br>HAVANT GB<br>./. | 1,10 |

CLASSIFICATION OF THE APPLICATION (Int Cl)

C 09 D 3/72
G 03 C 1/02
C 08 G 18/08

TECHNICAL FIELDS SEARCHED (Int Cl)

C 09 D 3/72
C 08 L 75/04
75/00
75/06
75/08
75/12
G 03 C 7/30
1/02
C 08 J 3/20
C 08 G 18/08

CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

X The present search report has been drawn up for all claims

| Place of search | Date of completion of the search | Examiner |
|---|---|---|
| The Hague | 21-05-1980 | V. PUYMBROECK |

European Patent Office

# EUROPEAN SEARCH REPORT

Application number
EP 80 10 0655



| DOCUMENTS CONSIDERED TO BE RELEVANT | | | CLASSIFICATION OF THE APPLICATION (Int Cl. 3) |
|---|---|---|---|
| Category | Citation of document with indication, where appropriate, of relevant passages | Relevant to claim | |
| | "Processes for achieving uniform, efficient distribution of hydrophobic materials through hydrophilic colloid layers and loaded latex compositions", pages 62-74 item 15930<br>* Page 62, right-hand column, last paragraph - page 63, left-hand column, paragraph 4 *<br>---- | | |
| | | | TECHNICAL FIELDS SEARCHED (Int. Cl. 3) |